# EUROPÄISCHE PATENTSCHRIFT

(11) **EP 3 338 515 B1**
(45) Veröffentlichungstag und Bekanntmachung des Hinweises auf die Patenterteilung: **08.04.2020**
(21) Anmeldenummer: 16741042.2
(22) Anmeldetag: 21.07.2016
(51) Int. Cl.: H05B 6/64

(54) **KERNTEMPERATURFÜHLER, MIKROWELLEN-GARGERÄT UND SYSTEM**
CORE TEMPERATURE PROBE, MICROWAVE COOKING DEVICE, AND SYSTEM
SONDE DE TEMPÉRATURE À COEUR, DISPOSITIF DE CUISSON À MICROONDES ET SYSTÈME

(30) Priorität: 19.08.2015 DE 102015215772
(43) Veröffentlichungstag der Anmeldung: 27.06.2018
(73) Patentinhaber: BSH Hausgeräte GmbH, 81739 München (DE)
(72) Erfinder: BEIFUSS, Wolfgang, 83339 Chieming (DE); STEINBACHER, Manfred, 83334 Inzell (DE)
(86) Internationale Anmeldenummer: PCT/EP2016/067349
(87) Internationale Veröffentlichungsnummer: WO 2017/029059

(56) Entgegenhaltungen:
- EP-A1- 2 458 936
- DE-A1-102014 117 693
- DE-U1-202010 016 860

## Beschreibung

Die Erfindung betrifft einen Kerntemperaturfühler, aufweisend mindestens einen Temperatursensor und eine mit dem mindestens einen Temperatursensor verbundene Signalübertragungsantenne, wobei über die Signalübertragungsantenne von dem mindestens einen Temperatursensor ermittelte Temperaturinformation auf einer Signalübertragungsfrequenz aussendbar ist, die sich von einer Mikrowellenfrequenz unterscheidet. Die Erfindung betrifft auch ein Mikrowellen-Gargerät mit einem mittels Mikrowellen einer vorgegebenen Mikrowellenfrequenz bestrahlbaren Garraum, aufweisend eine in dem Garraum angeordnete Signalübertragungsantenne zur Übertragung von Signalen auf einer Signalübertragungsfrequenz, die sich von der Mikrowellenfrequenz unterscheidet, und eine durch eine Backofenwand geführte Signalleitung. Die Erfindung betrifft ferner ein System aus einem solchen Mikrowellen-Gargerät und mindestens einem solchen Kerntemperaturfühler, wobei das System dazu eingerichtet ist, zwischen der Signalübertragungsantenne des Kerntemperaturfühlers und der Signalübertragungsantenne des Mikrowellen-Gargeräts drahtlos Signale auf der Signalübertragungsfrequenz zu übertragen. Die Erfindung ist insbesondere vorteilhaft anwendbar auf eine Mikrowellen-Backofen-Kombination. Die Erfindung ist auch besonders vorteilhaft anwendbar auf ein Haushaltsgerät.

Es ist bekannt, dass bei Backöfen, die auch eine Mikrowellenfunktion aufweisen, das Problem auftritt, dass Mikrowellenenergie, die über eine Signalübertragungsantenne eines Kerntemperaturfühlers oder des Backofens eingekoppelt wird, einen Betrieb von mit der Signalübertragungsantenne verbundenen Bauelementen wie eines Temperatursensors, einer elektrischen Schaltung, einer elektronischen Schaltung usw. stören oder die Bauelemente sogar zerstören kann. Zur Filterung solcher Mikrowellensignale ist es bekannt, auf einer Leiterplatte eine Filterschaltung vorzusehen, was jedoch aufwändig ist und einen großen Bauraum benötigt.

EP 1 757 862 B1 offenbart einen Ofen zum Garen von Speisen, umfassend: einen Garraum, der durch eine Ofentür zugänglich ist, Mittel, die dazu eingerichtet sind, Mikrowellen zur Ausbreitung in dem Garraum zu erzeugen und auszustrahlen, Steuermittel, die dazu eingerichtet sind, von externen Quellen empfangene Signale zu verarbeiten, und die Mikrowellenerzeugungs- und -ausstrahlungsmittel zum Betrieb abhängig von den Signalen, die von den externen Quellen empfangen werden, zu steuern, eine bewegliche Temperatursonde, die dazu eingerichtet ist, in die Speise, die im Inneren des Garraums des Ofens angeordnet ist, eingeführt zu werden, und die mit einer Vielzahl von Temperatursensoren versehen ist, die in vorbestimmten Abständen voneinander entlang der beweglichen Sonde verteilt sind, wobei die Sensoren elektrisch mit den Steuermitteln verbunden sind, um ihnen die Signale der externen Quellen zuzuführen, wobei die Steuermittel dazu eingerichtet sind, das Temperatursteuersignal, das von einem vorbestimmten der Sensoren kommt, zu empfangen und den Betrieb der Mikrowellenerzeugungs- und -ausstrahlungsmittel zu modifizieren, wenn festgestellt wurde, dass das Temperatursteuersignal einen vorbestimmten Wert erreicht hat, wobei die Steuermittel dazu eingerichtet sind, die Signale zu empfangen und zu vergleichen, die sich auf die von den Sensoren detektierten Temperaturen beziehen, dasjenige Signal zu identifizieren, das der höchsten Temperatur entspricht, und es als aktuelles Temperatursteuersignal auszuwählen und zu verwenden,
das mit dem vorbestimmten Temperarturwert zu vergleichen ist, um den Betriebsmodus der Mikrowellenerzeugungs- und -ausstrahlungsmittel entsprechend zu modifizieren. Das Problem der unerwünschten Einkopplung von Mikrowellen in Stromkreise wird nicht angesprochen.

EP 2 163 823 A1 betrifft einen Garprozessfühler für ein Gargerät zum Garen von Gargut, der eine zumindest teilweise in das Gargut einführbare Spitze, einen Griff und zumindest einen Temperatursensor aufweist, wobei die Ausgabedaten zumindest eines ersten Temperatursensors zur Einstellung zumindest einer Mikrowellenquelle des Gargeräts nutzbar sind, und der erste Temperatursensor von einem mikrowellenabsorbierenden Material umgeben ist; und ein Gargerät mit solch einem Garprozessfühler. Jedoch ist eine solche Abschirmung für die Signalübertragungsantenne nur wenig praktikabel.
DE 29 35 282 A1 offenbart eine Temperaturmesseinrichtung zur drahtlosen Überwachung der Temperatur eines Objekts mit einem passiv erregbaren Temperaturmessfühler und eine Sender/Empfänger-Einheit zur externen Erregung elektromagnetischer Wellen als Informationsträger für die jeweilige Temperatur des Objekts. Es ist eine Drosselanordnung offenbart, um zu verhindern, dass Mikrowellensignale in den Innenraum des Temperaturmessfühlers eindringen. Die Lage und der Aufbau der Drosselanordnung werden nicht weiter ausgeführt.

DE 10 2014 117 693 A1 offenbart ein Verfahren zum Erkennen eines Einflusses von Mikrowellen auf einen Messwert eines Temperatursensors eines Kerntemperaturfühlers eines Gargeräts. Das Verfahren weist die folgenden Schritte auf: es wird der Messwert des Temperaturfühlers aufgezeichnet; es wird in mindestens einem Analyseintervall, das in einem vorbestimmten Verhältnis zu einer Einschaltzeit und/oder einer Ausschaltzeit eines Mikrowellengenerators steht, die Steigung des Verlaufs der aufgezeichneten Messwerte bestimmt; es wird bestimmt, ob die Steigung oberhalb oder unterhalb einer vordefinierten Schwelle liegt; es wird das Über- oder Unterschreiten der Schwelle dahingehend interpretiert, dass der entsprechende Temperatursensor sich nicht in einem zu garenden Gargut befindet und/oder der Kerntemperaturfühler nicht korrekt in das Gargut oder in einer für diesen vorgesehenen Aufnahme gesteckt ist. DE 10 2014 117 693 A1 betrifft auch Gargerät mit einem Garraum, einem Mikrowellengenerator und einer Aufnahme für einen Kerntemperaturfühler, die im Garraum angeordnet ist, wobei die Aufnahme eine Einstecköffnung für den Kerntemperaturfühler aufweist und im Bereich der Einstecköffnung ein HF-Kurzschluss vorgesehen ist. DE 10 2014 117 693 A1 betrifft ferner einen Kerntemperaturfühler für ein Gargerät, mit wenigstens einem Temperatursensor und einer Verbindung, insbesondere einem Kabel, zu einer Steuereinheit, wobei eine Mikrowellenfalle, insbesondere eine λ/4-Falle, zwischen dem Temperatursensor und der Verbindung angeordnet ist.

DE 20 2010 016 860 U1 offenbart eine drahtlose Temperaturmesssonde, insbesondere für ein Haushaltsgerät, mit einem elektrisch leitfähigen Abschnitt und einem elektrisch isolierenden Abschnitt, wobei in dem elektrisch leitfähigen Abschnitt zumindest ein Temperatursensor und in dem elektrisch isolierenden Abschnitt eine Antenne angeordnet sind, die durch eine Verbindungsleitung verbunden sind, wobei zwischen der Antenne und dem Temperatursensor eine Bandsperre zum Abblocken der Mikrowellenstrahlung angeordnet ist.

Es ist die **Aufgabe** der vorliegenden Erfindung, die Nachteile des Standes der Technik zumindest teilweise zu überwinden und insbesondere eine kompakte, robuste und preiswerte Möglichkeit bereitzustellen, um zu verhindern, dass in einem Garraum eines Mikrowellen-Gargeräts über eine Signalübertragungsantenne eingekoppelte Mikrowellensignale damit verbundene Bauelemente schädigen können.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch einen Kerntemperaturfühler, gemäß Anspruch 1.

Dies ergibt den Vorteil, dass mittels des Lambda/4- bzw. λ/4-Leitungsresonanzelements über die Signalübertragungsantenne eingekoppelte Mikrowellensignale zumindest teilweise zu der Signalübertragungsantenne zurückreflektiert werden können, bevor sie zu einem Bauelement wie z.B. dem mindestens einen Temperatursensor gelangen. Somit kann die Stärke der auf das Bauelement einwirkenden Mikrowellensignale merklich verringert werden, und der Kerntemperaturfühler kann sicher gegen Mikrowellenstrahlung, die über die Signalübertragungsantenne eingekoppelt wurde, geschützt werden. Zudem ist eine solche Anordnung sehr kompakt aufbaubar, da keine großen elektrischen oder elektronischen Bauelemente benötigt werden und ferner das mindestens ein Lambda/4-Resonanz(leitungs)element platzsparend in der Koaxialleitung anordenbar oder integrierbar ist. Darüber hinaus ist eine solche Vorrichtung mechanisch robust und temperaturbeständig umsetzbar.

Dadurch, dass mindestens ein auf die Mikrowellenfrequenz eingestelltes Lambda/4-Leitungsresonanzelement vorhanden ist (wobei sich Lambda bzw. λ auf die Wellenlänge der Mikrowellenstrahlung und nicht der Signalübertragungsfrequenz bezieht), wird eine Fehlanpassung erzeugt, aufgrund derer es in der Koaxialleitung in Längsrichtung zu Impedanzsprüngen an den Übergängen zwischen Luft und dem Material des λ/4-Leitungsresonanzelements kommt. An den Orten der Impedanzsprünge werden die Mikrowellen zu einem wesentlichen Anteil zurückreflektiert.

Eine Länge von λ/4 kann allgemein eine Länge von λ/4 + n·λ/2 mit n = 0, 1, 2, 3, .... sein.

Der Kerntemperaturfühler kann auch als Speisenthermometer oder Temperaturspieß bezeichnet werden. Er kann insbesondere einen vorderseitigen nadelförmigen Abschnitt, mit dem er in diejenige Speise einzustecken ist, und einen rückwärtig an den nadelförmigen Abschnitt anschließenden Griff aufweisen. Der mindestens eine Temperatursensor kann in dem nadelförmigen Abschnitt angeordnet sein. Für den Fall mehrerer Temperatursensoren können diese in einer Reihe in Längsrichtung des nadelförmigen Abschnitts angeordnet sein. Der nadelförmige Abschnitt kann insbesondere eine hohlzylinderförmige Hülse (z.B. aus Edelstahl) aufweisen, welcher vorderseitig spitz geschlossen ist und in dem der mindestens eine Temperatursensor untergebracht ist.

Der Kerntemperaturfühler kann allgemein dazu eingerichtet sein, mindestens ein ("Temperatur"-)Signal über die Koaxialleitung an die Signalübertragungsantenne zur drahtlosen Abstrahlung zu leiten, welches Temperatursignal zumindest eine mittels des mindestens einen Temperatursensors ermittelte Temperaturinformation aufweist. Sowohl das über die Signalübertragungsantenne empfangene (Erregungs-)Signal als auch das über die Signalübertragungsantenne ausgesandte (Temperatur-)Signal können mit einer gleichen Signalübertragungsfrequenz übertragen werden, z.B. an das Gargerät, in dessen Garraum sich der Kerntemperaturfühler befindet.

Die Signalübertragungsantenne kann sich in dem Griff befinden oder aus dem Griff herausragen.

Jedoch kann grundsätzlich auch eine aktiv betreibbare Struktur verwendet werden, die mindestens einen Stromspeicher aufweist und die eigenständig in der Lage ist, mindestens ein Temperatursignal zu erzeugen.

Die Signalübertragungsantenne kann also in einer Weiterbildung als eine kombinierte Sende-/Empfangs-Antenne ausgebildet sein.

Die Signalübertragungsantenne ist vorteilhafterweise so ausgeführt, dass eine Reflexionsdämpfung bei der Mikrowellenfrequenz möglichst klein ist, d.h., dass die Signalübertragungsantenne so angepasst ist, dass sie möglichst wenig Mikrowellenleistung aufnimmt.

Die Koaxialleitung kann insbesondere einer Antennen(zu)leitung zwischen der Signalübertragungsantenne und der Struktur entsprechen.

Die Aufgabe wird auch gelöst durch ein Mikrowellen-Gargerät gemäß Anspruch 2.

Ein Mikrowellen-Gargerät mit einer solchen als Antennenzuleitung ausgebildeten Koaxialleitung ergibt die gleichen Vorteile wie die Koaxialleitung des analog ausgebildeten Kerntemperaturfühlers. Die Koaxialleitung des Mikrowellen-Gargeräts kann analog zu der Koaxialleitung des Kerntemperaturfühlers weitergebildet werden.

Das Mikrowellen-Gargerät kann analog zu dem Kerntemperaturfühler ausgebildet sein. Insbesondere kann die Koaxialleitung des Mikrowellen-Gargeräts analog zu der Koaxialleitung des Kerntemperaturfühlers ausgebildet sein.

Es ist eine Weiterbildung, dass das Mikrowellen-Gargerät ein eigenständiges Mikrowellengerät ist. Es ist noch eine Weiterbildung, dass das Mikrowellen-Gargerät ein kombiniertes Mikrowellen/Backofen-Gerät ist, z.B. ein Backofen oder Herd mit einer integrierten Mikrowellenfunktion ist. Das Gargerät kann auch noch eine Dampfgarfunktion aufweisen.

Das Mikrowellen-Gargerät kann zur Erzeugung der Mikrowellen ein Magnetron aufweisen.

Es ist eine Weiterbildung, dass das Mikrowellen-Gargerät ein Haushaltsgerät ist, insbesondere ein Küchengerät.

Es ist eine sowohl den Kerntemperaturfühler als auch das Mikrowellen-Gargerät betreffende Ausgestaltung, dass die Koaxialleitung einen aus einem Drahtstück gebildeten Innenleiter und einen aus einer Metallhülse gebildeten Außenleiter aufweist und mindestens ein Lambda/4-Leitungsresonanzelement als ein auf den Draht aufgezogener, radial bis zu der Metallhülse reichender hohlzylindrischer Isolatorkörper ausgebildet ist. Diese Ausgestaltung ist besonders robust und preiswert umsetzbar. Zudem kann der Isolatorkörper besonders kompakt und geometrisch besonders einfach ausgebildet sein.

Ein weiterer Vorteil besteht darin, dass der elektrische Isolatorkörper als eine Wärmebrücke zwischen dem inneren Draht und der äußeren Metallhülse dienen kann. Denn so kann von der Signalübertragungsantenne aus dem Garraum aufgenommene Wärme an die Metallhülse abgeleitet werden, die zumindest abschnittsweise auf der Temperatur der Speise liegt. Da eine Innentemperatur einer Speise, die durch den Kerntemperaturfühler abzufühlen ist, typischerweise 130 °C nicht überschreitet, eine Garraumtemperatur aber bis zu 300 °C erreichen kann, wird durch den Isolatorkörper eine erhebliche Kühlung des Drahts an seiner der Signalübertragungsantenne abgewandten Seite erreicht. Dies schützt den mindestens einen Temperatursensor und ggf. eine zusätzliche elektrische oder elektronische Schaltung vor einer Überhitzung.

Das Drahtstück kann beispielsweise ein Kupferdraht sein. Das Drahtstück kann einen kreisförmigen Querschnitt aufweisen. Das Drahtstück kann als die Signalübertragungsantenne weitergeführt sein, so dass ein Abschnitt eines Drahts die Signalübertragungsantenne und ein anderer Abschnitt des Drahts das Drahtstück der Koaxialleitung bilden kann.

Die Metallhülse besteht vorteilhafterweise aus Edelstahl, da dieser widerstandsfähig und preiswert ist.

Der Isolatorkörper besteht aus elektrisch isolierendem Material. Eine Form seiner Mantelfläche entspricht zum engen Abschluss an die Metallhülse vorteilhafterweise einer Innenkontur der Metallhülse. Die Mantelfläche weist insbesondere einen kreisförmigen Querschnitt auf, ist aber nicht darauf beschränkt. Mikrowellen, die über die Signalübertragungsantenne eingekoppelt werden, werden an der der Signalübertragungsantenne zugewandten Stirnseite zumindest teilweise reflektiert, da der Isolatorkörper dort aufgrund des Übergangs von z.B. Luft auf das Material des als A/4-Leitungsreonator(element)s wirkenden Isolatorkörpers einen Impedanzsprung bewirkt. Ein Anteil der Mikrowellen, der dort nicht reflektiert wird, sondern die Koaxialleitung weiterläuft, wird an der der Signalübertragungsantenne abgewandten Stirnseite dieses Isolatorkörpers erneut einen Impedanzsprung erfahren und daher zumindest teilweise zurück zu der Signalübertragungsantenne reflektiert. Funksignale werden hingegen praktisch verlustfrei durchgelassen.

Der Isolatorkörper kann für eine besonders robuste und geometrisch einfache Form ein - bis auf seine innere Durchführung für den Draht - kompakter Vollkörper sein (also keine gezielt eingebrachten Hohlräume aufweisen).

Es ist noch eine sowohl den Kerntemperaturfühler als auch das Mikrowellen-Gargerät betreffende Ausgestaltung, dass das Material des Isolatorkörpers eine Dielektrizitätskonstante εᵣ zwischen 6 und 15 aufweist, insbesondere von ca. 10 aufweist. Dies ist vorteilhaft, da sich so mit preiswerten Materialien ein Materialkörper kurzer Länge erreichen lässt.

Es ist außerdem eine sowohl den Kerntemperaturfühler als auch das Mikrowellen-Gargerät betreffende Ausgestaltung, dass eine Wärmeleitfähigkeit κ von mindestens 20 W / (m·K), insbesondere von mindestens 25 W / (m·K), aufweist. Dadurch wird eine besonders effektive Wärmeübertragung zwischen dem Draht und der Metallhülse erreicht.

Es ist eine weitere sowohl den Kerntemperaturfühler als auch das Mikrowellen-Gargerät betreffende Ausgestaltung, dass der Isolatorkörper ein Keramikkörper ist. Dies ergibt die Vorteile, dass der Isolatorkörper hochgradig elektrisch isolierend (mit einer Dielektrizitätskonstanten εᵣ von mindestens 6), gut wärmeleitend (mit einer Wärmeleitfähigkeit κ von mindestens 20 W / (m·K)), mechanisch widerstandsfähig und hochgradig temperaturbeständig (bis zu Temperaturen von über 750 °C) ausgestaltbar ist.

Es ist noch eine weitere sowohl den Kerntemperaturfühler als auch das Mikrowellen-Gargerät betreffende Ausgestaltung, dass die Koaxialleitung mindestens zwei Lambda/4-Leitungsresonanzelemente aufweist. Diese Reihenanordnung ist besonders effektiv darin, in die Signalübertragungsantenne und damit auch in die Koaxialleitung eingekoppelte Mikrowellensignale wieder zurückzureflektieren. Dabei können insbesondere zwei, drei oder noch mehr Lambda/4-Leitungsresonanzelemente vorgesehen sein. Die Zahl der Lambda/4-Leitungsresonanzelemente kann von dem gewünschten Reflexionsgrad und der erreichbaren Güte abhängen.

Es ist noch eine weitere sowohl den Kerntemperaturfühler als auch das Mikrowellen-Gargerät betreffende Ausgestaltung, dass mindestens zwei benachbarte Lambda/4-Leitungsresonanzelemente eine als Lambda/4-Resonanzleitung ausgebildete Luftleitung in der Koaxialleitung zwischen sich aufweisen. Dieser Aufbau unterstützt eine besonders starke Rückreflexion von in die Signalübertragungsantenne eingekoppelten Mikrowellensignalen.

Es ist ferner eine sowohl den Kerntemperaturfühler als auch das Mikrowellen-Gargerät betreffende Ausgestaltung, dass die Signalübertragungsfrequenz in dem 433-MHz-ISM-Band liegt, das von 433,05 MHz bis 434,79 MHz reicht. Dieses ISM-Band erlaubt eine Daten- bzw. Informationsübertragung mit weit verfügbaren und preiswerten Datenübertragungskomponenten. Auch ist es von üblichen Mikrowellenfrequenzen bei 2,455 GHz oder in dem ISM-Band zwischen 902 und 928 MHz, insbesondere bei 915 MHz, so weit entfernt, dass praktisch kein Übersprechen zwischen den beiden Frequenzen stattfindet.

Es ist eine insbesondere den Kerntemperaturfühler betreffende Ausgestaltung, dass die den Außenleiter bildende Metallhülse auch den mindestens einen Temperatursensor abdeckt. Die Metallhülse kann also die gleiche Metallhülse sein, in der auch der mindestens eine Temperatursensor und ggf. die elektrische oder elektronische Schaltung untergebracht ist. Dies ermöglicht eine besonders einfache Montage und kann helfen, Spalte in dem Kerntemperaturfühler zu vermeiden.

Es ist noch eine insbesondere den Kerntemperaturfühler betreffende Ausgestaltung, dass der Kerntemperaturfühler ein Substrat mit einer insbesondere schlitzförmigen Aussparung aufweist, wobei der Innenleiter, insbesondere das Drahtstück, in die Aussparung eingesteckt wird. Die Aussparung kann elektrisch mit einer an dem Substrat angeordneten Leiterbahn verbunden sein, wobei die Leiterbahn eine freie Länge von Lambda/4 aufweist. Die Leiterbahn kann z.B. eine Kupferleiterbahn sein. Die Aussparung kann alternativ insbesondere mit Metall, insbesondere Kupfer, gefüllt sein. Der Innenleiter, insbesondere das Drahtstück, kann in die Aussparung eingepresst und an die Leiterbahn angelötet sein. Die Leiterbahn ist eine leerlaufende Leiterbahn, die ebenfalls als λ/4-Transformationselement ausgeführt ist und einen Leerlauf am Ende der Leitung (d.h., am Übergang zu dem Substrat) in einen Kurzschluss am Kontaktpunkt (insbesondere Anlötpunkt) transformiert. Dadurch kann vorteilhafterweise an dem Bauelementeträger noch eine weitere Rückreflexion von Mikrowellensignalen erfolgen

Es ist eine zur Erreichung einer besonders kompakten Bauform vorteilhafte Weiterbildung, dass die Leiterbahn an einer Seite des Substrats angeordnet ist, die derjenigen Seite, an welcher der mindestens eine Temperatursensor, angeordnet ist, abgewandt ist. Der mindestens eine Temperatursensor kann z.B. mit dem Innenleiter dort elektrisch verbunden sein, wo sich an der Leiterbahn der HF-Kurzschluss befindet. Der mindestens eine Temperatursensor kann mit der Leiterbahn einen gemeinsamen Knoten mit dem Innenleiter bilden.

Es ist auch eine insbesondere den Kerntemperaturfühler betreffende Ausgestaltung, dass das Substrat ein Substrat für mindestens einen OFW-Temperatursensor ist. Das Substrat kann insbesondere aus Keramik oder FR4 oder einem Polyimid bestehen. Die Koaxialleitung kann insbesondere einer Antennen(zu)leitung zwischen der Signalübertragungsantenne und dem Substrat entsprechen. Der mindestens eine OFW-Temperatursensor kann sich auf dem Substrat befinden (z.B. in SMD-Bauweise) oder mit diesem über mindestens eine elektrische Leitung verbunden sein. Die Verwendung eines OFW-Temperatursensors - insbesondere zusammen mit einem Substrat aus Keramik -weist den Vorteil auf, dass der Kerntemperaturfühler hochgradig temperaturbeständig (z.B. bis zu über 200 °C) und robust ist. Der mindestens eine OFW-Temperatursensor kann zusammen mit dem Substrat als OFW-Temperaturmesseinrichtung bezeichnet werden. Der mindestens eine OFW-Temperatursensor ermöglicht es, einen fernauslesbaren Temperaturfühler zu bilden, z.B. nach Art eines funkauslesbaren Transponders.

Es ist eine Weiterbildung, dass der Kerntemperaturfühler zusätzlich mindestens ein aus herkömmlichen Bauelementen aufgebautes Mikrowellenfilter, insbesondere Tiefpassfilter, aufweist, das zwischen dem mindestens einen Lambda/4-Leitungsresonanzelement und dem mindestens einen Temperatursensor angeordnet ist, insbesondere auf dem Substrat, das auch den mindestens einen Temperatursensor trägt. Dabei wird ausgenutzt, dass die ankommende Mikrowellenenergie so gering ist, dass sie die herkömmlichen Bauelemente nicht mehr schädigt. Das Mikrowellenfilter ist für Funkwellen, z.B. im 433-MHz-Bereich, durchlässig.

Die Aufgabe wird ferner gelöst durch ein System aus einem Mikrowellen-Gargerät wie oben beschrieben und mindestens einem Kerntemperaturfühler wie oben beschrieben, wobei das System dazu eingerichtet ist, zwischen der Signalübertragungsantenne des Kerntemperaturfühlers und der Signalübertragungsantenne des Mikrowellen-Gargeräts drahtlos Signale auf der Signalübertragungsfrequenz zu übertragen.

Das System kann analog zu dem Kerntemperaturfühler und/oder zu dem Mikrowellen-Gargerät ausgebildet werden und ergibt die gleichen Vorteile.

Ein möglicher Betrieb des Systems kann beispielsweise folgendermaßen erfolgen:
Eine in einem Garraum des Mikrowellen-Gargeräts zu behandelnde Speise, z.B. ein Stück Fleisch, soll auf seine Kerntemperatur überwacht werden, so dass das Mikrowellen-Gargerät auf der Grundlage der Kerntemperatur einen Garbetrieb steuern kann. Beispielsweise kann das Mikrowellen-Gargerät den Garbetrieb mit Erreichen einer vorbestimmten Kerntemperatur oder einer vorgegebenen Dauer oberhalb einer bestimmten Kerntemperatur beenden. Das Mikrowellen-Gargerät ist z.B. ein Backofen mit einer zusätzlichen Mikrowellenfunktionalität, so dass die Speise abwechselnd oder gleichzeitig durch elektrische Ofenheizkörper wie eine Umluftheizung, ein Oberhitzeheizkörper, ein Unterhitzeheizkörper usw. und durch Mikrowellen behandelbar ist. Zur Überwachung der Kerntemperatur wird der Kerntemperaturfühler mit seinem nadelförmigen Abschnitt, in dem sich mehrere in Reihe angeordnete Temperatursensoren befinden, in die Speise gesteckt. Ein rückwärtiger Griff des Kerntemperaturfühlers befindet sich außerhalb der Speise.

Der Kerntemperaturfühler ist von dem Mikrowellen-Gargerät drahtlos (insbesondere über Funk) fernabfragbar. Dazu weist das Mikrowellen-Gargerät eine sich zumindest teilweise in dem Garraum befindliche Signalübertragungsantenne auf, mittels der ein Anregungs-Funksignal (z.B. in dem 433-MHz-Frequenzband) in den Garraum abstrahlbar ist. Das Anregungs-Funksignal kann z.B. immer dann abgestrahlt werden, wenn das Mikrowellen-Gargerät zum Betrieb eine Temperaturinformation benötigt, z.B. aufweisend die von den Temperatursensoren messbaren oder erfassbaren Kerntemperaturwerte.

Das Anregungs-Funksignal wird über eine Signalübertragungsantenne des Kerntemperaturfühlers aufgenommen, die auf die Übertragungsfrequenz von ca. 433 MHz abgestimmt ist. Das aufgenommene Anregungs-Funksignal wird über die Koaxialleitung an eine passiv erregbare OFW-Temperaturmesseinrichtung weitergeleitet. Die OFW-Temperaturmesseinrichtung weist beispielsweise ein Substrat, z.B. aus Keramik oder FR4, auf, an dessen Oberfläche mindestens ein OFW-Temperatursensor vorhanden ist. Die OFW-Temperatursensoren können als ein Teil der OFW-Temperaturmesseinrichtung verstanden werden. Durch das Anregungs-Funksignal wird der mindestens eine OFW-Temperatursensor passiv dazu angeregt, ein Informationssignal, das die abgefragten Kerntemperaturwerte umfasst, zu erzeugen und an die Signalübertragungsantenne zu leiten. Das Informationssignal wird von der Signalübertragungsantenne des Kerntemperaturfühlers in den Garraum abgestrahlt (und zwar ebenfalls in dem 433-MHz-ISM-Frequenzband) und von der Signalübertragungsantenne des Mikrowellen-Gargeräts empfangen. Das empfangene Informationssignal wird über eine Koaxialleitung durch eine Garraumwand zu einer Empfangsschaltung geleitet, welche das Informationssignal zur Nutzung durch das Gargerät verarbeitet.

Das Gargerät kann dazu beispielsweise eine eigenständige Auswerteschaltung aufweisen, die z.B. mit einer zentralen Steuereinrichtung verbunden ist. Alternativ kann die zentrale Steuereinrichtung die Funktion einer Auswerteschaltung aufweisen.

Das Mikrowellen-Gargerät kann zur Erzeugung des Anregungs-Funksignals und zum Verarbeiten des Informationssignals insbesondere eine kombinierte Funk-Sende-/Empfangs-Schaltung aufweisen. Diese kann z.B. mit einer zentralen Steuereinrichtung des Mikrowellen-Gargeräts verbunden sein.

Obwohl die Signalübertragungsantennen des Kerntemperaturfühlers und des Mikrowellen-Gargeräts auf das 433-MHz-ISM-Frequenzband abgestimmt und gezielt auf eine schlechte Kopplung im Bereich der Mikrowellenfrequenz (z.B. von 2,45 GHz) hin ausgelegt sind, kann es aufgrund der hohen Leistung der Mikrowellen von bis zu ca. 1000 W zu einer so starken Einkopplung von Mikrowellensignalen in die Signalübertragungsantennen kommen, dass mit den Signalübertragungsantennen verbundene Strukturen beschädigt oder sogar ganz zerstört werden. Damit diese eingekoppelten Mikrowellensignale praktisch unschädlich gemacht werden, ist das mindestens eine in die Koaxialleitung integrierte Lambda/4-Leitungsresonanzelement vorgesehen, das eine Impedanzwandlung bewirkt, so dass die Mikrowellensignale daran zumindest teilweise zu der jeweiligen Signalübertragungsantenne zurückreflektiert werden.

Die Erfindung kann auch durch entsprechende Verfahren gelöst werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt als Schnittdarstellung in Draufsicht einen Ausschnitt aus einem Kerntemperaturfühler mit einer Signalübertragungsantenne und einer Koaxialleitung und darunter einem entsprechenden Ersatzschaltbild; und
- Fig.2: zeigt als Schnittdarstellung in Draufsicht einen Ausschnitt aus einem Mikrowellen-Gargerät mit einer Signalübertragungsantenne und einer Koaxialleitung und darunter einem entsprechenden Ersatzschaltbild.

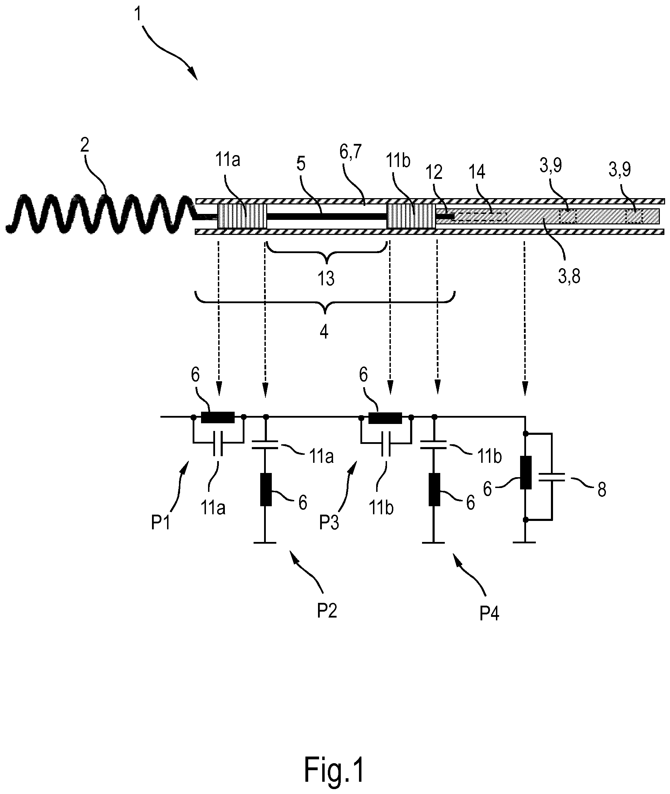

**Fig.1** zeigt als Schnittdarstellung in Seitenansicht einen Ausschnitt aus einem Kerntemperaturfühler 1 mit einer Signalübertragungsantenne 2, einer OFW-Temperaturmesseinrichtung 3 und einer die Signalübertragungsantenne 2 und die OFW-Temperaturmesseinrichtung 3 verbindenden Koaxialleitung 4.

Die Signalübertragungsantenne 2 ist als eine aus einem Kupferdraht hergestellte Wendelantenne ausgebildet, die in einen als Kupferdraht ausgebildeten geradlinigen Innenleiter 5 der Koaxialleitung 4 übergeht. Die Signalübertragungsantenne 2 und der Innenleiter 5 können einstückig aus einem einzigen Drahtstück hergestellt worden sein. Der Außenleiter 6 der Koaxialleitung 4 besteht aus einer hohlzylinderförmigen Edelstahlhülse 7, die sich - ggf. unter Änderung ihrer Querschnittsform - längs bis über die OFW-Temperaturmesseinrichtung 3 oder sogar noch darüber hinaus erstreckt. Die OFW-Temperaturmesseinrichtung 3 weist ein Keramik- oder FR4-Substrat 8 auf, an dem oberseitig ein oder mehrere OFW-Temperatursensoren 9 angeordnet sind. Insbesondere können die OFW-Temperatursensoren 9 auf dem Substrat 8 angelötet sein. Die OFW-Temperatursensoren 9 können SMD-Bauteile sein.

Die OFW-Temperaturmesseinrichtung 3 kann allgemein außer den OFW-Temperatursensoren 9 auch mindestens ein aus herkömmlichen Bauelementen (o. Abb.) aufgebautes Mikrowellenfilter, insbesondere Tiefpassfilter, aufweisen. Dabei wird ausgenutzt, dass die an dem Substrat 8 ankommende Mikrowellenenergie so gering ist, dass sie die herkömmlichen Bauelemente nicht mehr schädigt. Das herkömmliche Mikrowellenfilter kann insbesondere zwischen der Leiterbahn und den OFW-Temperatursensoren 9 angeordnet sein.

Der Innenleiter 5 ist stirnseitig in eine schlitzförmige Aussparung 12 des Substrats 8 eingesteckt. Die Edelstahlhülse 7 kann an ihrem vorderseitigen Ende (hier rechts von der OFW-Temperaturmesseinrichtung 3 angeordnet, o. Abb.) spitz ausgebildet sein, um damit in eine Speise eingesteckt zu werden. Die Edelstahlhülse 7 dient auch als Schirmung und verhindert, dass die OFW-Temperaturmesseinrichtung 3 direkt durch Funk- und Mikrowellenstrahlung bestrahlt werden kann.

Die OFW-Temperaturmesseinrichtung 3 ist über ein Funk-Anregungssignal in dem 433-MHz-ISM-Band anregbar. Das Funk-Anregungssignal wird über die dazu ausgelegte Signalübertragungsantenne 2 eingekoppelt und verlustarm oder sogar praktisch verlustfrei durch die Koaxialleitung 4 zu der OFW-Temperaturmesseinrichtung 3 geleitet. Das Funk-Anregungssignal regt die OFW-Temperatursensoren 9 dazu an, ein abgewandeltes Funksignal als das Temperatursignal zu erzeugen, das über die Koaxialleitung 4 zurück zu der Signalübertragungsantenne 2 geleitet und von dieser abgestrahlt wird. Das abgewandelte Funksignal enthält (Temperatur-) Information, die mittels des mindestens einen OFW-Temperatursensors 9 ermittelt worden ist. Der Kerntemperaturfühler 1 ist typischerweise so tief in die Speise eingesteckt, dass der mindestens eine OFW-Temperatursensor 9 in der Speise steckt und folglich einen Temperaturwert misst, welcher der Kerntemperatur der Speise mit ausreichender Genauigkeit entspricht.

Um zu verhindern, dass über die Signalübertragungsantenne 2 eingekoppelte Mikrowellensignale bzw. Mikrowellenenergie die OFW-Temperaturmesseinrichtung 3 beschädigen oder zerstören können oder kann, weist die Koaxialleitung 4 zwei auf die Mikrowellenfrequenz (von z.B. 915 MHz oder 2,45 GHz) eingestellte bzw. angepasste Lambda/4-Leitungsresonanzelemente in Form von hohlzylindrischen Keramikröhrchen 11a und 11b auf. Die Keramikröhrchen 11a und 11b weisen jeweils eine Länge von einem Viertel der Wellenlänge λ_{Ker} der Mikrowellenstrahlung in dem Keramikmaterial auf, z.B. von ca. zehn Millimetern. Das Keramikmaterial kann beispielsweise eine Dielektrizitätskonstante εᵣ zwischen 6 und 15 (z.B. von 10) und eine Wärmeleitfähigkeit κ von mindestens 20 W / (m·K) (z.B. von 25 W / (m·K)) aufweisen. Der drahtförmige Innenleiter 5 ist so durch den inneren Hohlraum der Keramikröhrchen 11a und 11b geführt, dass die beiden Keramikröhrchen 11a und 11b einen Abstand von λ_{Luft}/4 (mit λ_{Luft} der Wellenlänge der Mikrowellenstrahlung in Luft) zueinander aufweisen, z.B. von ca. 30 mm. Dadurch bildet sich an der Koaxialleitung 4 eine Luftleitung 13 für die Mikrowellen der Länge λ_{Luft}/4 zwischen den beiden Keramikröhrchen 11a und 11b aus, die auch als eine λ/4-Leitungsresonanz wirkt. Die Keramikröhrchen 11a und 11b füllen jeweils den Raum zwischen dem Innenleiter 5 und dem Außenleiter 6 radial vollständig aus, reichen also bis zu dem Außenleiter 6.

Zudem weist das Substrat 8 dort, wo der Innenleiter 5 eingesteckt ist, unterseitig eine geradlinige, leerlaufende Leiterbahn 14 (gestrichelt angedeutet), beispielsweise eine Kupferleiterbahn, auf. Die Leiterbahn 14 weist eine Länge von λ/4 der Mikrowelle auf, die abhängig von einer Permittivität des Substrats 8 ist. Die Leiterbahn 14 und die OFW-Temperatursensoren 9 sind also an unterschiedlichen Flachseiten des Substrats 8 angeordnet.

Diese Anordnung entspricht für die Mikrowellen funktional dem darunter gezeigten Ersatzschaltbild bzw. der darunter gezeigten Äquivalenzschaltung. Die Äquivalenzschaltung entspricht einer HF-Schaltung, wobei an der Koaxialleitung 4 ein "erster" Pol P1 dort vorhanden ist, wo - ausgehend von der Signalübertragungsantenne 2 - ein erster Übergang von Luft auf das Keramikröhrchen 11a vorhanden ist (nämlich an der antennenseitigen Stirnseite des Keramikröhrchens 11a). Dieser Übergang, an dem ein Impedanzsprung auftritt, entspricht einem HF-Leerlauf für die Mikrowellen.

An der der Signalübertragungsantenne 2 abgewandten Stirnseite des Keramikröhrchens 11a wird durch den Impedanzsprung an dem Übergang Keramik-Luft ein HF-Kurzschluss erzeugt, der auch als eine Reihenschaltung zu Masse des als Kondensator wirkenden Keramikröhrchens 11a und der als Induktivität dienenden Metallhülse 7 dargestellt werden kann. Diese Reihenschaltung kann einen weiteren, "zweiten" Pol P2 der HF-Äquivalenzschaltung darstellen.

Analog zu dem ersten Keramikröhrchen 11a ist an der Koaxialleitung 4 dort ein "dritter" Pol P3 vorhanden ist, wo - ausgehend von der Signalübertragungsantenne 2 - ein erster Übergang von Luft auf das Keramikröhrchen 11b vorhanden ist (nämlich an der antennenseitigen Stirnseite des Keramikröhrchens 11b). Dieser Übergang entspricht ebenfalls einem HF-Leerlauf für die Mikrowellen, der in der Äquivalenzschaltung als eine Parallelschaltung zwischen dem als Kondensator wirkenden Keramikröhrchen 11b und der als Induktivität dienenden Metallhülse 7 dargestellt werden kann.

Auch kann an der der Signalübertragungsantenne 2 abgewandten Stirnseite des Keramikröhrchens 11b durch den Übergang Keramik-Luft ein HF-Kurzschluss erzeugt werden, der als eine Reihenschaltung zu Masse des als Kondensator wirkenden Keramikröhrchens 11b und der als Induktivität dienenden Metallhülse 7 dargestellt werden kann. Diese Reihenschaltung kann einen "vierten" Pol P4 der HF-Äquivalenzschaltung darstellen.

Folglich wird durch jedes der beiden Keramikröhrchen für die Mikrowellensignale eine Impedanzwandlung bewirkt, aufgrund derer die Mikrowellensignale merklich zu der Signalübertragungsantenne 2 zurückreflektiert werden. Die Ausbildung der Luftleitung 13 zwischen den beiden Keramikröhrchen 11a und 11b als eine λ/4-Leerlaufleitung kann eine besonders effektive Impedanzwandlung bewirken.

Zur weiteren Blockade oder Filterung der Mikrowellensignale ist die Leiterbahn 14 als eine λ/4-Leerlaufleitung ausgebildet, deren substratseitiges Ende offen ist und damit einen Kurzschluss zum Eingang der Koaxialleitung 4 transformiert.

In einer äquivalenten Beschreibung der Impedanztransformationen, die von der Leiterbahn 14 ausgeht, handelt es sich bei der Leiterbahn 14 um eine leerlaufende Leitung, die einen Leerlauf in einen Kurzschluss in P4 transformiert. Der Kurzschluss in P4 wird durch die Keramikhülse 11b in einen Leerlauf in P3 transformiert. Die dann folgende λ/4-Leitung 13 wandelt den Leerlauf in P3 wieder in einen Kurzschluss in P2 um, wobei dieser durch die Keramikhülse 11a wieder in einen Leerlauf in P1 an der Antenne 2 transformiert wird. Die von der Antenne 2 kommend Mikrowelle sieht hierbei theoretisch einen Leerlauf und wird total reflektiert. Da durch endliche Güten der Bauteile bei dieser hohen Frequenz ein absoluter Leerlauf oder Kurzschluss nicht herzustellen ist, soll an den Polen P1 - P4 möglichst viel Mikrowellenleistung zu der Antenne 2 zurückreflektiert werden.
Die Funktionsweise dieser Mikrowellenfilterung lässt sich also von beiden Seiten, d.h., von der Antenne 2 oder von der Leiterbahn 14, aus erklären. In beiden Fällen treten insbesondere an Stoßstellen Impedanzwandlungen und damit große Reflexionen für das Mikrowellensignal auf.
Der HF-Leerlauf kommt insbesondere dadurch zustande, dass durch eine größere Änderung der Impedanz der Koaxialleitung 4 eine Reflexion einer vorlaufenden Welle entsteht. Die reflektierte, rücklaufende Welle überlagert sich mit der vorlaufenden Welle. Je nach dem Betrachtungspunkt der Überlagerung auf der Koaxialleitung 4 können je nach Phasenlage Auslöschungen oder Überhöhungen entstehen. Ein Fall mit einer besonders starken Reflexion ist die λ/4-Leitung, bei der sich durch Reflexion an einem Ende (der einem Leerlauf entspricht) der λ/4-Leitungeine vollkommene Auslöschung am Eingang der λ/4-Leitung ergibt, d.h. es wird ein Leerlauf in einen Kurzschluss transformiert. Bei einem Kurzschluss an einem Leitungsende ist es umgekehrt. Die Kapazitäten und Induktivitäten der Koaxialleitung 4 bestimmen die Impedanz der λ/4-Leitungund damit die Größe des Reflexionsfaktors. Ein Parallelkreis in Serie mit seiner theoretisch unendlich großen Impedanz im Resonanzfall wird dabei als Ersatzschaltung für einen transformierten Leerlauf verwendet, und ein Serienkreis nach Masse (mit seiner Null-Impedanz) als transformierter Kurzschluss für die jeweilige Frequenz.

Der gezeigte Kerntemperaturfühler 1 ist insbesondere auch deshalb in der Lage, Mikrowellenenergie von dem Substrat 8 abzuhalten, da aus Sicht derjenigen Stelle, an der Mikrowellensignale in das Substrat 8 eingekoppelt werden bzw. würden - nämlich dem substratseitigen Ende der λ/4-Leerlaufleitung - vier praktisch unmittelbar aneinander anschließende λ/4-Leitungsresonanzabschnitte für die Mikrowellenfrequenz vorgeschaltet sind, und zwar (in Reihenfolge von dem Substrat 8 zu der Wendelantenne 2) die Leiterbahn 14, das Keramikröhrchen 11b, die Luftleitung 13 zwischen den beiden Keramikröhrchen 11a und 11b sowie das Keramikröhrchen 11a. Damit lässt sich auf preiswerte und kompakte Weise eine Dämpfung der Mikrowellensignale um mindestens 15 dB, insbesondere mindestens 18 dB, insbesondere mindestens 20 dB, insbesondere mindestens 22 dB, erreichen.

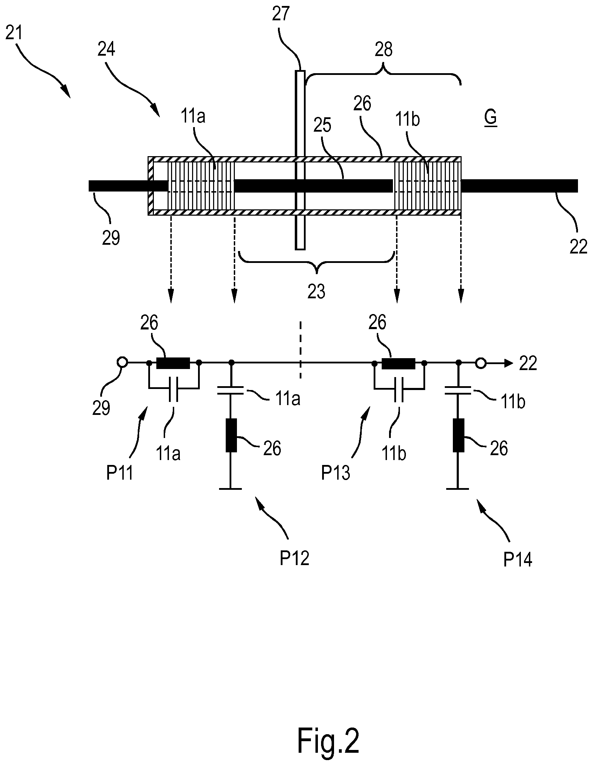

**Fig.2** zeigt als Schnittdarstellung in Seitenansicht einen Ausschnitt aus einem Mikrowellen-Gargerät 21 mit einer Koaxialleitung 24 und darunter einem entsprechenden Äquivalenzschaltbild. Die Koaxialleitung 24 ragt durch eine Wand 27 des Mikrowellen-Gargeräts 21 und ist mit ihrem in einem Garraum G befindlichen Ende mit einer Signalübertragungsantenne 22 in Form einer Monopolantenne verbunden. Die Signalübertragungsantenne 22 und ein Innenleiter 25 der Koaxialleitung 24 können aus einem gemeinsamen Drahtstück hergestellt sein. Das andere, außerhalb des Garraums G befindliche Ende der Koaxialleitung 24, das als ein Anschluss 29 dient, kann beispielsweise mit einer insbesondere als Elektronik ausgebildeten Auswerteschaltung und/oder einer Sende-/Empfangs-Schaltung verbunden sein, z.B. über ein 50-Ohm-Koaxialkabel.
Alternativ zu einer Monopolantenne kann auch eine andere Antennenart verwendet werden.
Die Koaxialleitung 24 ist ähnlich zu der Koaxialleitung 4 aufgebaut. Sie weist beispielsweise ebenfalls zwei als λ/4-Leitungsresonanzelemente dienende Keramikröhrchen 11a und 11b auf, die durch eine als λ/4-Leitungsresonanz dienende λ/4-Leerlaufleitung in Form einer Luftstrecke oder Luftleitung 23 voneinander getrennt sind. Auch die Koaxialleitung 24 weist eine Edelstahlhülse als Außenleiter 26 auf.

Folglich werden auch an der Koaxialleitung 24 in die Signalübertragungsantenne 22 eingekoppelte Mikrowellen vierfach an den Übergängen zwischen Luft und Keramik zurückreflektiert. Dies kann in dem darunter eingezeichneten Äquivalenzschaltbild durch vier Pole P11 bis P14 veranschaulicht werden, die entsprechend der Positionen der Luft-Keramik-Übergänge für die Mikrowellen abwechselnd als Kurzschluss (Pole P11 und P13) und Leerlauf (Pole P12 und P14) ausgebildet sind. Der Bezugspunkt ist dabei insbesondere der dem Garraum abgewandte Anschluss der Koaxialleitung 24.

Zusätzlich ist der sich in dem Garraum G befindliche Abschnitt 28 des Außenleiters 26 als λ/4-Leerlaufleitung ausgebildet, was eine Reflexion bzw. Filterung noch effektiver gestaltet.

Die Koaxialleitungen 4 und 24 sind für Funksignale praktisch verlustfrei leitend ausgebildet. Auch sind die Signalübertragungsantennen 2 und 22 an die Funkfrequenz angepasst. Folglich können in einem System aus dem Mikrowellen-Gargerät 21 und einem in dem Garraum G befindlichen Kerntemperaturfühler 1 zwischen den Signalübertragungsantennen 2 und 22 drahtlos Signale auf der als Signalübertragungsfrequenz dienenden Funkfrequenz übertragen werden, aber Mikrowellen effektiv gefiltert oder blockiert werden.

Selbstverständlich ist die vorliegende Erfindung nicht auf das gezeigte Ausführungsbeispiel beschränkt.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 1: Kerntemperaturfühler
- 2: Signalübertragungsantenne
- 3: OFW-Temperaturmesseinrichtung
- 4: Koaxialleitung
- 5: Innenleiter
- 6: Außenleiter
- 7: Edelstahlhülse
- 8: Keramiksubstrat
- 9: OFW-Temperatursensor
- 11a: Keramikröhrchen
- 11b: Keramikröhrchen
- 12: Aussparung
- 13: Luftleitung
- 14: Leiterbahn
- P1: Erster Pol
- P2: Zweiter Pol
- P3: Dritter Pol
- P4: Vierter Pol
- P11: Erster Pol
- P12: Zweiter Pol
- P13: Dritter Pol
- P14: Vierter Pol
- 21: Mikrowellen-Gargerät
- 22: Signalübertragungsantenne
- 23: Luftleitung
- 24: Koaxialleitung
- 25: Innenleiter
- 26: Außenleiter
- 27: Wand des Mikrowellen-Gargeräts
- 28: In dem Garraum befindlicher Abschnitt des Außenleiters
- 29: Dem Garraum abgewandter Anschluss
- G: Garraum

## Patentansprüche

1. Kerntemperaturfühler (1), aufweisend
- mindestens einen Temperatursensor (9) und eine mit dem mindestens einen Temperatursensor (9) verbundene Signalübertragungsantenne (2), wobei
- über die Signalübertragungsantenne (2) von dem mindestens einen Temperatursensor (9) ermittelte Temperaturinformation auf einer Signalübertragungsfrequenz aussendbar ist, die sich von einer Mikrowellenfrequenz unterscheidet,
- der mindestens eine Temperatursensor (9) über eine Koaxialleitung (4) mit der Signalübertragungsantenne (2) verbunden ist,
- die Koaxialleitung (4) mindestens ein auf die Mikrowellenfrequenz eingestelltes Lambda/4-Leitungsresonanzelement (11a, 11b) aufweist,
- die Koaxialleitung (4; 24) einen aus einem Drahtstück gebildeten Innenleiter (5; 25) und einen aus einer Metallhülse gebildeten Außenleiter (6; 26) aufweist,
**dadurch gekennzeichnet, dass**
- mindestens ein Lambda/4-Leitungsresonanzelement als ein auf den Draht aufgezogener, radial bis zu der Metallhülse reichender hohlzylindrischer Isolatorkörper (11a, 11b) ausgebildet ist.

2. Mikrowellen-Gargerät (21) mit einem mittels Mikrowellen einer vorgegebenen Mikrowellenfrequenz bestrahlbaren Garraum (G), aufweisend
- eine in dem Garraum (G) angeordnete Signalübertragungsantenne (22) zur Übertragung von Signalen auf einer Signalübertragungsfrequenz, die sich von der Mikrowellenfrequenz unterscheidet und
- eine durch eine Backofenwand (27) geführte Signalleitung, wobei
- die Signalleitung zumindest abschnittsweise eine Koaxialleitung (24) ist und
- die Koaxialleitung (24) mindestens ein auf die Mikrowellenfrequenz eingestelltes Lambda/4-Leitungsresonanzelement (11a, 11b) aufweist,
- die Koaxialleitung (4; 24) einen aus einem Drahtstück gebildeten Innenleiter (5; 25) und einen aus einer Metallhülse gebildeten Außenleiter (6; 26) aufweist, **gekennzeichnet durch**
- mindestens ein Lambda/4-Leitungsresonanzelement als ein auf den Draht aufgezogener, radial bis zu der Metallhülse reichender hohlzylindrischer Isolatorkörper (11a, 11b) ausgebildet ist.

3. Vorrichtung (1; 21) nach einem der vorhergehenden Ansprüche, **dadurch gekennzeichnet, dass** das Material des Isolatorkörpers (11a; 11b) eine Dielektrizitätskonstante εᵣ zwischen 6 und 15 und eine Wärmeleitfähigkeit κ von mindestens 20 W / (m·K) aufweist.

4. Vorrichtung (1; 21) nach einem der vorhergehenden Ansprüche, **dadurch gekennzeichnet, dass** der Isolatorkörper (11a; 11b) ein Keramikkörper ist.

5. Vorrichtung (1; 21) nach einem der vorhergehenden Ansprüche, **dadurch gekennzeichnet, dass** der Isolatorkörper (11a; 11b) eine Länge eines Viertels der Mikrowellenfrequenz und zusätzlich eines n-fachen Vielfachen einer Hälfte der Mikrowellenfrequenz mit n = 0, 1, 2, 3, .... aufweist.

6. Vorrichtung (1; 21) nach einem der vorhergehenden Ansprüche, **dadurch gekennzeichnet, dass** die Koaxialleitung (4; 24) mindestens zwei Lambda/4-Leitungsresonanzelemente (11a, 11b) aufweist, wobei mindestens zwei benachbarte Lambda/4-Leitungsresonanzelemente (11a, 11b) eine als Lambda/4-Resonanzleitung ausgebildete Luftstrecke (13; 23) in der Koaxialleitung (4; 24) zwischen sich aufweisen.

7. Vorrichtung (1; 21) nach einem der vorhergehenden Ansprüche, **dadurch gekennzeichnet, dass** die Signalübertragungsfrequenz in dem 433-MHz-ISM-Band liegt.

8. Kerntemperaturfühler (1) nach Anspruch 1 in Kombination mit einem der Ansprüche 3 bis 7, **dadurch gekennzeichnet, dass** die Metallhülse (6) auch den mindestens einen Temperatursensor (9) abdeckt.

9. Kerntemperaturfühler (1) nach Anspruch 1 in Kombination mit einem der Ansprüche 3 bis 8, **dadurch gekennzeichnet, dass**
- der Kerntemperaturfühler (1) ein Substrat (8) mit einer Aussparung (12) aufweist,
- das Drahtstück (5) in die Aussparung (12) eingesteckt ist und elektrisch mit einer an dem Substrat (8) angeordneten Leiterbahn (14) verbunden ist und
- die Leiterbahn (14) eine freie Länge von Lambda/4 aufweist.

10. Kerntemperaturfühler (1) nach Anspruch 1 oder nach Anspruch 1 in Kombination mit einem der Ansprüche 3 bis 9, **dadurch gekennzeichnet, dass** der mindestens eine Temperatursensor (9) ein Oberflächenwellen-, OFW-, Bauelement ist.

11. System (1, 21) aus einem Mikrowellengargerät (21) nach einem der Ansprüche 2 bis 7 und mindestens einem Kerntemperaturfühler (1) nach Anspruch 1 oder nach Anspruch 1 in Kombination mit einem der Ansprüche 3 bis 10, wobei das System (1, 21) dazu eingerichtet ist, zwischen der Signalübertragungsantenne (2) des Kerntemperaturfühlers (1) und der Signalübertragungsantenne (22) des Mikrowellen-Gargeräts (21) drahtlos Signale auf der Signalübertragungsfrequenz zu übertragen.

## Claims

1. Core temperature probe (1), having
- at least one temperature sensor (9) and a signal transmission antenna (2) that is connected to the at least one temperature sensor (9), wherein
- temperature information that is determined by the at least one temperature sensor (9) may be emitted over the signal transmission antenna (2) at a signal transmission frequency that differs from a microwave frequency,
- the at least one temperature sensor (9) is connected to the signal transmission antenna (2) by way of a coaxial line (4),
- the coaxial line (4) has at least one lambda/4 line resonance element (11a, 11b) that is adjusted to the microwave frequency,
- the coaxial line (4; 24) has an inner conductor (5; 25) that is formed from a piece of wire and an outer conductor (6; 26) that is formed from a metal sleeve,
**characterised in that.**
- at least one lambda/4 line resonance element takes the form of a hollow-cylindrical insulating body (11a, 11b) that is drawn over the wire and extends radially as far as the metal sleeve.

2. Microwave cooking appliance (21) having a cooking chamber (G) that may be irradiated by microwaves of a predetermined microwave frequency, having:
- a signal transmission antenna (22) that is arranged in the cooking chamber (G), for transmitting signals at a signal transmission frequency that differs from the microwave frequency, and
- a signal line that is guided through an oven wall (27), wherein
- the signal line is at least in certain sections a coaxial line (24), and
- the coaxial line (24) has at least one lambda/4 line resonance element (11a, 11b) that is adjusted to the microwave frequency,
- the coaxial line (4; 24) has an inner conductor (5; 25) that is formed from a piece of wire and an outer conductor (6; 26) that is formed from a metal sleeve, **characterised by**
- at least one lambda/4 line resonance element takes the form of a hollow-cylindrical insulating body (11a, 11b) that is drawn over the wire and extends radially as far as the metal sleeve.

3. Device (1; 21) according to one of the preceding claims, **characterised in that** the material of the insulating body (11a; 11b) has a dielectric constant εᵣ of between 6 and 15 and a thermal conductivity κ of at least 20 W/(m·K).

4. Device (1; 21) according to one of the preceding claims, **characterised in that** the insulating body (11a; 11b) is a ceramic body.

5. Device (1; 21) according to one of the preceding claims, **characterised in that** the insulating body (11a; 11b) has a length of one quarter of the microwave frequency and additionally an n-times multiple of half the microwave frequency, where n = 0, 1, 2, 3,

6. Device (1; 21) according to one of the preceding claims, **characterised in that** the coaxial line (4; 24) has at least two lambda/4 line resonance elements (11a, 11b), wherein at least two adjacent lambda/4 line resonance elements (11a, 11b) have between them in the coaxial line (4; 24) an air section (13; 23), which takes the form of a lambda/4 resonance line.

7. Device (1; 21) according to one of the preceding claims, **characterised in that** the signal transmission frequency is in the 433 MHz ISM band.

8. Core temperature probe (1) according to claim 1 in combination with one of claims 3 to 7, **characterised in that** the metal sleeve (6) also covers the at least one temperature sensor (9).

9. Core temperature probe (1) according to claim 1 in combination with one of claims 3 to 8, **characterised in that**
- the core temperature probe (1) has a substrate (8) having a recess (12),
- the piece of wire (5) is inserted into the recess (12) and is electrically connected to a printed conductor (14) arranged on the substrate (8), and
- the printed conductor (14) has a free length of lambda/4.

10. Core temperature probe (1) according to claim 1, or according to claim 1 in combination with one of claims 3 to 9, **characterised in that** the at least one temperature sensor (9) is a surface wave constituent element.

11. System (1, 21) comprising a microwave cooking appliance (21) according to one of claims 2 to 7 and at least one core temperature probe (1) according to claim 1, or according to claim 1 in combination with one of claims 3 to 10, wherein the system (1, 21) is intended to transmit signals at the signal transmission frequency wirelessly between the signal transmission antenna (2) of the core temperature probe (1) and the signal transmission antenna (22) of the microwave cooking appliance (21).

## Revendications

1. Sonde de température à cœur (1), présentant
- au moins un capteur de température (9) et une antenne de transmission de signaux (2) reliée à l'au moins un capteur de température (9), dans laquelle
- une information de température déterminée par l'au moins un capteur de température (9) peut être émise via l'antenne de transmission de signaux (2) sur une fréquence de transmission de signaux qui se différencie d'une fréquence de micro-ondes,
- l'au moins un capteur de température (9) est relié à l'antenne de transmission de signaux (2) via une ligne coaxiale (4),
- la ligne coaxiale (4) présente au moins un élément de résonance à fils lambda/4 (11a, 11b) réglé sur la fréquence de micro-ondes,
- la ligne coaxiale (4 ; 24) présente un conducteur interne (5 ; 25) constitué d'un morceau de câble et un conducteur externe (6 ; 26) constitué d'un fourreau métallique, **caractérisé en ce que**
- au moins un élément de résonance à fils lambda/4 est exécuté sous la forme d'un corps d'isolateur cylindrique creux (11a, 11b) inséré sur le câble et atteignant radialement le fourreau métallique.

2. Appareil de cuisson à micro-ondes (21) avec un espace de cuisson (G) pouvant être irradié au moyen de micro-ondes d'une fréquence de micro-ondes déterminée au préalable, présentant
- une antenne de transmission de signaux (22) disposée dans l'espace de cuisson (G) pour la transmission de signaux sur une fréquence de transmission de signaux qui se différencie de la fréquence de micro-ondes et
- une ligne de signaux menée à travers une paroi de four (27),
dans lequel
- la ligne de signaux est au moins par sections une ligne coaxiale (24) et
- la ligne coaxiale (24) présente au moins un élément de résonance à fils lambda/4 (11a, 11b) réglé sur la fréquence de micro-ondes,
- la ligne coaxiale (4 ; 24) présente un conducteur interne (5 ; 25) constitué d'un morceau de câble et un conducteur externe (6 ; 26) constitué d'un fourreau métallique, **caractérisé en ce que**
- au moins un élément de résonance à fils lambda/4 est exécuté sous la forme d'un corps d'isolateur cylindrique creux (11a, 11b) inséré sur le câble et atteignant radialement le fourreau métallique.

3. Dispositif (1 ; 21) selon l'une des revendications précédentes, **caractérisé en ce que** le matériau du corps d'isolateur (11 a; 11 b) présente une constante diélectrique εᵣ entre 6 et 15 et une conductivité thermique κ d'au moins 20 W / (m·K).

4. Dispositif (1 ; 21) selon l'une des revendications précédentes, **caractérisé en ce que** le corps d'isolateur (11a ; 11b) est un corps en céramique.

5. Dispositif (1 ; 21) selon l'une des revendications précédentes, **caractérisé en ce que** le corps d'isolateur (11a ; 11b) présente une longueur d'un quart de la fréquence de micro-ondes et en outre un multiple n d'une moitié de la fréquence de micro-ondes avec n = 0, 1, 2, 3, ....

6. Dispositif (1 ; 21) selon l'une des revendications précédentes, **caractérisé en ce que** la ligne coaxiale (4 ; 24) présente au moins deux éléments de résonance à fils lambda/4 (11a, 11b), dans lequel au moins deux éléments de résonance à fils lambda/4 voisins (11a, 11b) présentent entre eux une distance d'isolement dans l'air (13 ; 23) exécutée sous la forme d'une ligne de résonance lambda/4 dans la ligne coaxiale (4 ; 24).

7. Dispositif (1 ; 21) selon l'une des revendications précédentes, **caractérisé en ce que** la fréquence de transmission de signaux se trouve dans la plage 433-MHz-ISM.

8. Sonde de température à cœur (1) selon la revendication 1 en combinaison avec une des revendications 3 à 7, **caractérisée en ce que** le fourreau métallique (6) couvre également l'au moins un capteur de température (9).

9. Sonde de température à cœur (1) selon la revendication 1 en combinaison avec une des revendications 3 à 8, **caractérisée en ce que**
- la sonde de température à cœur (1) présente un substrat (8) avec un évidement (12),
- le morceau de câble (5) est inséré dans l'évidement (12) et relié électriquement à une piste conductrice (14) disposée sur le substrat (8) et
- la piste conductrice (14) présente une longueur libre de lambda/4.

10. Sonde de température à cœur (1) selon la revendication 1 ou selon la revendication 1 en combinaison avec l'une des revendications 3 à 9, **caractérisé en ce que** l'au moins un capteur de température (9) est un composant de surface ondulé, OFW.

11. Système (1, 21) composé d'un appareil de cuisson à micro-ondes (21) selon l'une des revendications 2 à 7 et au moins une sonde de température à cœur (1) selon la revendication 1 ou selon la revendication 1 en combinaison avec une des revendications 3 à 10, dans lequel le système (1, 21) est aménagé afin de transmettre sans fil des signaux sur la fréquence de transmission de signaux, entre l'antenne de transmission de signaux (2) de la sonde de température à cœur (1) et l'antenne de transmission de signaux (22) de l'appareil de cuisson à micro-ondes (21).
